# EUROPÄISCHE PATENTSCHRIFT

(11) **EP 2 013 057 B1**
(45) Veröffentlichungstag und Bekanntmachung des Hinweises auf die Patenterteilung: **20.07.2011**
(21) Anmeldenummer: 07722318.8
(22) Anmeldetag: 27.04.2007
(51) Int. Cl.: B60N 2/30, B60N 2/36

(54) **KRAFTFAHRZEUGSITZ**
MOTOR VEHICLE SEAT
SIÈGE DE VÉHICULE AUTOMOBILE

(30) Priorität: 27.04.2006 DE 102006022800
(43) Veröffentlichungstag der Anmeldung: 14.01.2009
(73) Patentinhaber: MAGNA SEATING (GEMANY) GMBH, 63877 Sailauf (DE)
(72) Erfinder: KULIHA, Norbert, 63773 Goldbach (DE); VENTURA, Kevin, 63739 Aschaffenburg (DE); TAME, Omar, D., West Bloomfield, MI 48324 (US); ZEIMIS, Peter, Paul, III, Shelby Township, MI 48316 (US); MCLAUGHLIN, Matthew, J., Chesterfield Twp., MI 48051 (US)
(74) Vertreter: Völger, Silke Beatrix
(86) Internationale Anmeldenummer: PCT/DE2007/000761
(87) Internationale Veröffentlichungsnummer: WO 2007/124729

(56) Entgegenhaltungen:
- WO-A2-02/47937
- DE-A1- 10 244 293
- US-A- 5 570 931
- US-A1- 2006 250 013

## Beschreibung

Die vorliegende Erfindung betrifft einen Kraftfahrzeugsitz, bei dem die Bewegung der Rückenlehne mit der Bewegung des Sitzteils gekoppelt ist, sowie ein Kraftfahrzeug mit einem solchen Kraftfahrzeugsitz.

Aus dem Stand der Technik sind Kraftfahrzeugsitze bekannt, die eine Rückenlehne und ein Sitzteil umfassen. Um den Gepäckraum hinter den Kraftfahrzeugsitzen zu vergrößern, können die Rückenlehnen der bekannten Sitze in Richtung des Sitzteils umgeklappt oder verschwenkt werden. Hierbei ist es wünschenswert, die Rückeniehne derart tief nach vorne zu klappen, dass deren Rückseite nach dem Verschwenken auf einer Ebene mit und möglichst parallel zu dem Gepäckraumboden liegt. Da die meisten Sitztelle jedoch weit nach oben hervorstehen, war es notwendig, die Sitzteile der bekannten Kraftfahrzeugsitze absenkbar und/oder nach vorne verlagerbar zu gestalten, um auch die Rückeniehnen entsprechend weit nach unten verschwenken zu können.

Einen einfachen Kraftfahrzeugsitz mit einer umlegbaren Rückeniehne und einer nach vorne absenkbaren Sitzfläche, deren Bewegungen in einem gewissen Bereich gekoppelt sind zeigt das Dokument US 7,014,263 B2. Im Bereich eines vorderen Schwenkwinkels der Rückenlehne wird die Sitzfläche in ihrer Absenkbewegung mitgenommen. In einem hinteren Bereich des Schwenkwinkels, der dem Komfortversteilbereich beim Gebrauch des Kraftfahrzeugsitz entspricht, ist die Koppelung aufgehoben, die Sitzflache führt dementsprechend keine Bewegung aus.

Weiterhin beschreibt das Dokument DE 103 55 765 A1 einen Kraftfahrzeugsitz mit einer klappbaren Rückenlehne und einem absenkbaren Sitzteil, wobei die Rückenlehne in Richtung des Sitzteils geklappt werden kann. Es ist ferner ein Mechanismus vorgesehen, so dass das Sitzteil aus einer angehobenen Gebrauchslage in eine nach vorne verlagerte tiefere Position abgesenkt werden kann. Um die Bewegung der Rückenlehne mit der Bewegung des Sitzteils zu koppeln, ist ein Koppelglied vorgesehen. Ferner wird ein Verriegelungsmechanismus eingesetzt, um das Sitzteil in der Gebrauchslage zu verriegeln. Dies dient dem Zweck eine unbeabsichtigte Vorverlagerung der Sitzfläche bei einem Aufprallunfall sicher zu verhindern. Das Koppelglied ist dabei derart ausgelegt, dass der Verriegelungsmechanismus beim Vorklappen der Rückenlehne zu dem Sitzteil erst dann entriegelt wird, wenn die Rückenlehne einen vorbestimmten Neigungswinkel einnimmt. Danach sind die Bewegungen von Rückenlehne und Sitzteil derart gekoppelt, dass das Sitzteil bei einem weitergehenden Vorklappen der Rückenlehne in die genannte abgesenkte Position bewegt wird. Das Koppelglied ist hierbei als Schub- bzw. Druckstange ausgebildet, die auf einen oder mehrere Verstellhebel des Mechanismus des Sitzteils drückt

Der bekannte Kraftfahrzeugsitz hat sich bewährt, ist jedoch mit dem Nachteil behaftet, dass der vorgeschlagene Mechanismus viele Einzelteile umfasst und dadurch einen vergleichsweise aufwendigen Zusammenbau bedingt.

Aus der WO-A-02/047937 ist weiterhin ein Fahrzeugsitz mit auf die Sitzfläche schwenkbarer Rückenlehne bekannt. Hierbei ist die Sitzanordnung nach einer Entriegelung der Sitzfläche um einen Hauptschwenkzapfen von einer Sitzposition in eine Verstauposition verlagerbar.

Die US 5,570,931 A offenbart einen verstaubaren Sitz der hinteren Sitzreihe, der nach einer Entriegelung der Sitzfläche im hinteren Bereich über eine Parallelogrammführung nach vorne und unten verschwenkt werden kann.

Des Weitern ist aus der DE 102 44 293 B4 ein Fahrzeugsitz bekannt, der über eine Parallelogrammführung verlagerbar gehalten ist. Hierzu sind am vorderen und hinteren Sitzbereich jeweils zwei Schwingen angeordnet. Zusätzlich weist der Fahrzeugsitz eine Einstellvorrichtung auf, die ein in der hinteren Schwingen angeordnetes Bogenloch umfasst. Im Bogenloch ist eine Kreisscheibe geführt, die mit einem Ritzel verbunden ist. Durch Drehen des Ritzels wird das Gelenkviereck und gleichzeitig die Rückenlehne verstellt.

Es ist daher eine Aufgabe der vorliegenden Erfindung, einen Kraftfahrzeugsitz der gattungsgemäßen Art zu schaffen, der eine geringe Störanfälligkeit und einen besonders einfachen Aufbau hat. Der Erfindung liegt ferner die Aufgabe zu Grunde, ein Kraftfahrzeug mit einem solchen vorteilhaften Kraftfahrzeugsitz zu schaffen.

Diese Aufgabe löst die vorliegende Erfindung durch einen Kraftfahrzeugsitz mit den Merkmalen gemäß Anspruch 1. Durch die vorzugsweise an der Struktur der Rückenlehne im Bereich der Schwenkachse angeordneten Sperrelemente wird eine überaus kostengünstig herstellbare Verriegelung der Sitzfläche gegen ein unbeabsichtigtes Absenken im Fall eines Aufprallunfalls möglich. Die Sperrelemente können besonders vorteilhaft als bajonettartige Haken an den Gelenkbeschlägen der Rückenlehne ausgebildet werden.

Weitere vorteilhafte Ausgestaltungen der vorliegenden Erfindung sind in den Unteransprüchen angegeben.

Bevorzugte Ausführungsformen der vorliegenden Erfindung werden nachfolgend beispielshalber beschrieben, wobei auf die anhängenden Zeichnungen Bezug genommen wird. Darin zeigen:
- Fig. 1: einen Ausschnitt aus einem seitlichen Aufriss von einem ersten Kraftfahrzeugsitz gemäß der vorliegenden Erfindung in einer Gebrauchsstellung;
- Fig. 2: eine schematische Darstellung der tragenden Struktur und der Mechanik des ers- ten Kraftfahrzeugsitzes gemäß Fig. 1;
- Fig. 3: eine schematische Darstellung der Struktur des ersten Kraftfahrzeugsitzes gemäß Fig. 1 mit abgenommener seitlicher Schubstange; und

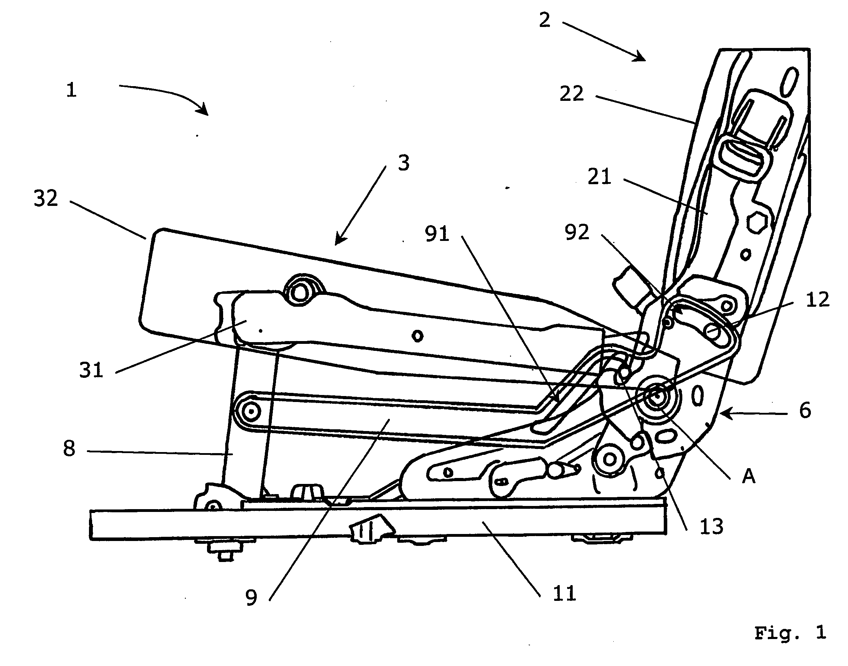

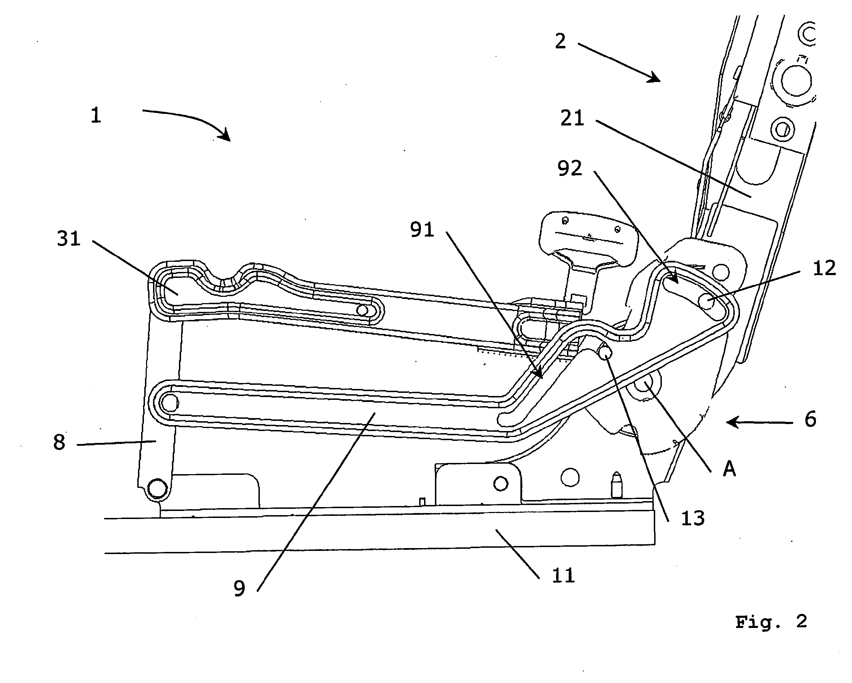

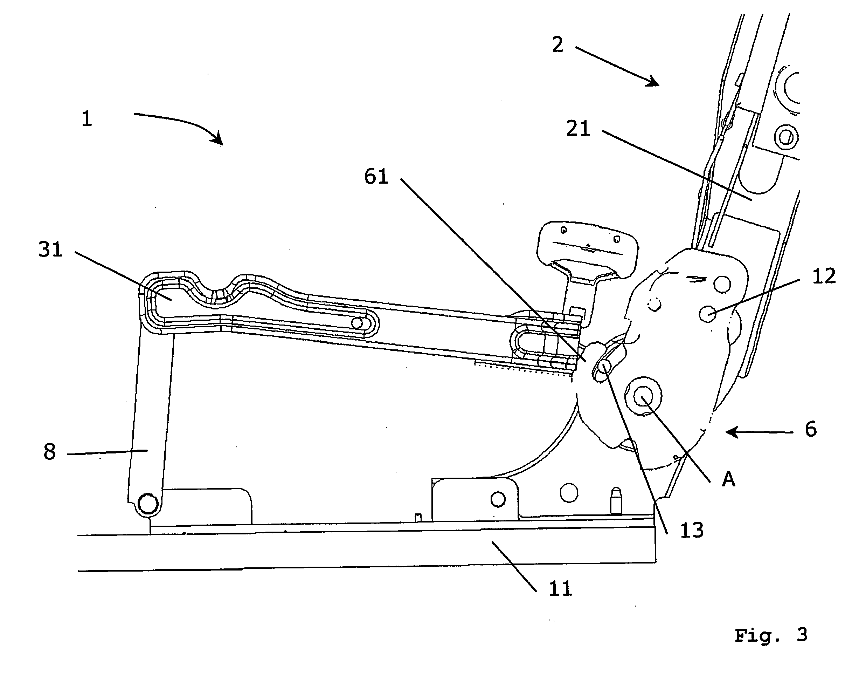

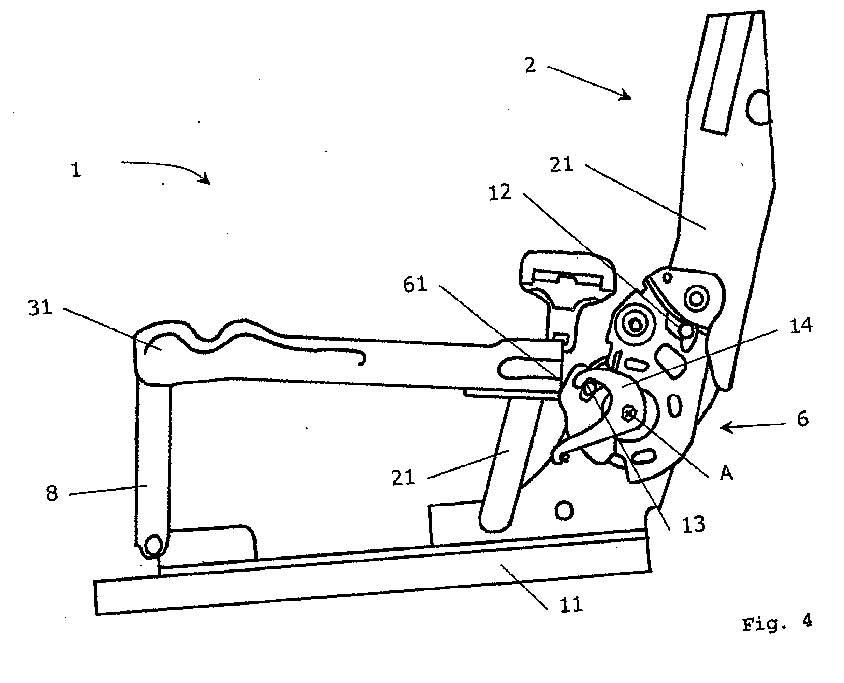

Die in den Fig. 1 bis 3 gezeigte erste Ausführungsform eines erfindungsgemäßen Kraftfahrzeugsitzes 1 umfasst eine Sitzbasis 11 zur Anbringung an einem Fahrzeugkörper. An der Sitzbasis 11 können zweckmäßig Mittel zur Längsverstellung des Sitzes 1 im Fahrzeug vorgesehen sein. Hierauf wird vorliegend nicht in weiteren Einzelheiten eingegangen. An der Sitzbasis 11 ist ferner in einem Beschlag 6 die Struktur einer Rückenlehne 2 in bekannter Weise um die Achse A verschwenkbar angeschlagen. Auf der Struktur 21 der Rückenlehne 2 liegt in gebräuchlicher Weise eine Polsterung 22 auf. Falls wie bei der dargestellten ersten Ausführungsform eine manuelle Verstellung der Rückenlehne 2 erfolgen soll, sind, vorzugsweise im Bereich der Gelenkbeschläge 6, zusätzliche Feststelleinrichtungen vorgesehen, um die Rückeniehne 2 in verschiedenen Stellungen abgestuft oder stufenlos gegenüber der Sitzbasis 11 festlegen zu können. Diese Feststelleinrichtungen sind hinlänglich bekannt, weshalb hier auf weitere Einzelheiten diesbezüglich nicht eingegangen wird. Wird andernfalls eine motorische Verstellmöglichkeit der Rückenlehne 2 gewünscht, sind vorzugsweise elektrische Antriebseinrichtungen wiederum vorzugsweise im Bereich neben oder zwischen den Gelenkbeschlägen 6 angeordnet. Dies ist aus dem Stand der Technik gleichfalls bekannt.

Das die Sitzfläche bildende Sitzteil 3 umfasst eine tragende Struktur 31 und eine darauf aufliegende Polsterung 32. An ihrem vorderen Ende ist die Struktur 31 durch einen Stützarm 8 in gelenkig an der Sitzbasis 11 angeschlagen. In der dargestellten angehobenen Gebrauchsstellung des Sitzteils 3 ist der Stützarm 8 ungefähr senkrecht über der Sitzbasis 11 aufgerichtet. Dadurch nimmt die Vorderkante des Sitzteils 3 wie dargestellt eine hohe Position ein. Beim Absenken verlagert sich das Sitzteil 3 nach vorne, wodurch der Stützarm 8 zum vordern Ende der Sitzbasis 11 hin abgelegt wird. Die Vorderkante der Sitzfläche 3 senkt sich dadurch und gibt dadurch den Raum frei für ein vollständiges Ablegen der Rückenlehne 2.

Zur Ankopplung der Bewegungen des Sitzteils 3 an die Schenkbewegung der Rückenlehne 2 dient eine Schubstange 9, die mit ihrem vordem Ende an dem Stützarm 8 gelenkig angeschlagen ist. In bekannter Weise ist vorgesehen, dass diese Ankopplung erst bei einer Verschwenkung der Rückenlehne 2 außerhalb des Bereichs der Gebrauchsstellungen, also außerhalb des Komforteinstellbereichs hergestellt wird. Dies ist an der Anbindungsstelle zur Rückenlehne 2 ausgestaltet. Das zur Mitnahme eines an der Rückenlehne 2 angeordneten Mitnehmerbolzens 12 vorgesehene bogenförmige Langloch 92 in der Schubstange 9 sieht dementsprechend einen Leerweg vor. Bei einer geringfügigen Bewegung der Rückenlehne 2 im Bereich der Gebrauchsstellungen bewegt sich der Mitnehmerbolzen 12 lediglich innerhalb der Aussparung des bogenförmigen Langlochs 92. Die Schubstange 9 wird durch eine solche Bewegung nicht betätigt. Hingegen erreicht bei einer ausreichend weit nach vorne ausladenden Verschwenkung der Rückenlehne 2 der Mitnehmerbolzen 12 das vordere Ende des bogenförmigen Langlochs 92 und nimmt die Schubstange 9 bei der weiteren Bewegung nach vorne mit. Wegen der ungefähr mittigen Anbindung der Schubstange 9 an dem vorderen Stützarm 8 Uberträgt sich die Schubbewegung entsprechend der Hebelübersetzung in annähernd doppeltem Umfang auf das Sitzteil 3.

Am hinteren Ende des Sitzteils 3 ist dessen Struktur 31 durch einen Zapfen 13 in einer ungefähr s-förmigen Kulisse 91 in der Schubstange 9 gehalten. Bei einer Bewegung der Sitzfläche 3 nach vorne gleitet der Zapfen 13 in der Kulisse 91 schräg nach unten, wodurch sich die Hinterkante des Sitzteils 3 absenkt.

In der angehobenen Gebrauchsstellungen des Sitzteils 3 ist dessen Struktur 31 aus Sicherheitsgründen vorzugsweise an ihrem hinteren Ende durch eine aufhebbare Verriegelung gegen die Sitzbasis 11 festgelegl. Dadurch soll eine unbeabsichtigte Absenkung des Sitzteils 3 bei einem Aufprallunfall vermieden werden, falls hierbei die mechanische Ankopplung der Struktur 31 der Sitzfläche 3 an die Rückenlehne 2 durch eine auftretende Überlast zerstört wird. Die vorgesehene Verriegelung erfolgt durch vorzugsweise beiderseits an den mit der Rückenlehne 2 starr verbundenen Teilen der Gelenkbeschläge 6 angeordnete Haken 61 oder ähnliche Sperrelemente, die ein Rastelement, wie den gezeigten Zapfen 13 umgreifen, wenn sich die Rückenlehne 2 im Bereich der Gebrauchsstellungen befindet. Bei einer Verschwenkbewegung der Rückenlehne 2 aus dem Bereich der Gebrauchsstellungen heraus bewegen sich die Haken 61 auf einer Kreisbahn und verlassen dadurch die dargestellte Eingriffsposition. Dann sind die Zapfen 13 für eine Bewegung in der Kulisse 91 freigegeben.

Vorteilhaft sind am hinteren Ende der Struktur 31 des Sitzteils 3 nach hinten abstehende Ausleger oder Vorsprünge vorgesehen, die auf entsprechenden Gegenlagerstellen an der Sitzbasis 11 in der Gebrauchsstellung aufliegen. Dadurch wird die Kulissenführung 91, 13 von den Kräften aufgrund der Sitzbelegung entlastet. Dies ist in den Zeichnungen wegen der gewählten Perspektive jedoch nicht erkennbar.

## Patentansprüche

1. Kraftfahrzeugsitz (1), aufweisend eine verschwenkbare Rückenlehne (2) und ein absenkbares Sitzteil (3), die miteinander durch eine mechanische Verbindung (9, 13) gekoppelt sind, um bei einem Verschwenken der Rückenlehne (2) aus dem Bereich der Gebrauchsstellungen heraus das Sitzteil (3) abzusenken, und eine aufhebbare Verriegelung (13, 61), die eingerichtet ist, das Sitzteil (3), welches eine tragende Struktur (31) umfasst, gegenüber einer fahrzeugfest anzubringenden Sitzbasis (11) festzulegen, wenn sich die Rückenlehne (2) im Bereich ihrer Gebrauchsstellungen befindet, und bei deren Verlassen aufgehoben zu werden, und wobei die Verriegelung ein Sperrelement (61) umfasst, das in der Nähe des Verschwenkgelenks (A) an der Rückenlehne (2) angeordnet und durch deren Verschwenken mit einem Rastelement (13) an dem Sitzteil (3) in Eingriff bringbar ist, und wobei das hintere Ende der Struktur (31) des Sitzteils (3) in einer Kulisse (91) geführt ist, **dadurch gekennzeichnet, dass** die Absenkbewegung des Sitzteils (3) an die Verschwenkbewegung der Rückenlehne (2) durch eine Schubstange (9) bewirkt wird, und wobei die Kulisse (91) in der Schubstange (9) ausgebildet ist.

2. Kraftfahrzeugsitz (1) nach Anspruch 1, wobei das Sperrelement (7) ein vorzugsweise bajonettförmiger Haken (61) ist, der in eine einen Zapfen (13) am Ende der Struktur (31) des Sitzteils (3) umgreifende Position bewegbar ist.

3. Kraftfahrzeugsitz (1) nach Anspruch 2, wobei der Haken (61) an dem mit der Struktur (21) der Rückenlehne (2) verbundenen Teil des Gelenkbeschlags (6) ausgebildet Ist.

4. Kraftfahrzeugsitz (1) nach Anspruch 1, wobei die Anbindung der Schubstange (9) an die Rückenlehne (2) einen Leerweg aufweist.

5. Kraftfahrzeugsitz (1) nach Anspruch 4, wobei die Anbindung der Schubstange (9) an die Rückenlehne (2) durch einen an deren Struktur (21) angeordneten Mitnehmerbolzen (12) bewirkt wird, der in einem Langloch (92) der Schubstange (9) aufgenommen ist.

6. Kraftfahrzeugsitz (1) nach einem der vorangehenden Ansprüche, wobei die Struktur (31) des Sitzteils (3) in dessen Gebrauchsstellung an ihrem hinteren Ende in einem Auflager gegenüber der Sitzbasis (11) abgestützt ist.

## Claims

1. Motor vehicle seat (1) having a pivotable backrest (2) and a lowerable seat part (3) which are coupled to each other by a mechanical connection (9, 13) in order to lower the seat part (3) when the backrest (2) is pivoted out of the region of the operative positions, and an unlockable lock (13, 61) which is designed to secure the seat part (3), which comprises a load-bearing structure (31), in relation to a seat base (11), which is to be mounted fixedly on the vehicle, when the backrest (2) is in the region of the operative positions thereof and to be unlocked when the backrest leaves said positions, and wherein the lock comprises a blocking element (61) which is arranged in the vicinity of the pivoting joint (A) on the backrest (2) and, by pivoting of the latter, can be brought into engagement with a latching element (13) on the seat part (3), and wherein the rear end of the structure (31) of the seat part (3) is guided in a guide slot (91), **characterized in that** the lowering movement of the seat part (3) is coupled to the pivoting movement of the backrest (2) by a connecting rod (9), and the guide slot (91) being formed in the connecting rod (9).

2. Motor vehicle seat (1) according to Claim 1, wherein the blocking element (7) is a preferably bayonet-shaped hook (61) which is movable into a position engaging around a pin (13) at the end of the structure (31) of the seat part (3).

3. Motor vehicle seat (1) according to Claim 2, wherein the hook (61) is formed on that part of the hinge fitting (6) which is connected to the structure (21) of the backrest (2).

4. Motor vehicle seat (1) according to Claim 1, wherein the connection of the connecting rod (9) to the backrest (2) has free travel.

5. Motor vehicle seat (1) according to Claim 4, wherein the connecting rod (9) is connected to the backrest (2) by a driver bolt (12) which is arranged on the structure (21) of the latter and is received in an elongated hole (92) in the connecting rod (9).

6. Motor vehicle seat (1) according to one of the preceding claims, wherein the rear end of the structure (31) of the seat part (3), in the use position thereof, is supported in relation to the seat base (11) in a support.

## Revendications

1. Siège de véhicule automobile (1), comportant un dossier (2) pivotable et une partie d'assise (3) abaissable couplés entre eux par le biais d'une jonction mécanique (9, 13), pour rabaisser la partie d'assise (3) lors d'un pivotement du dossier (2) hors de la zone des positions d'utilisation et un verrouillage (13, 61) relevable qui est conçu pour fixer la partie d'assise (3) comprenant une structure (31) portante par rapport à une base de siège (11) à fixer par rapport au véhicule, lorsque le dossier (2) se trouve dans la zone de ses positions d'utilisation, et pour le relever lorsqu'il en sort et le verrouillage comprenant un élément de blocage (61) disposé à proximité de l'articulation pivotante (A) au niveau du dossier (2) et pouvant être amené par son pivotement en mise en prise avec un élément d'encliquetage (13) au niveau de la partie d'assise (3) et l'extrémité arrière de la structure (31) de la partie d'assise (3) étant guidée dans un coulisseau (91), **caractérisé en ce que** le mouvement d'abaissement de la partie d'assise (3) est couplé au mouvement de pivotement du dossier (2), par une barre de poussée (9) et le coulisseau (91) étant réalisé dans la barre de poussée (9).

2. Siège de véhicule automobile (1) selon la revendication 1, l'élément de blocage (7) étant un crochet (61) de préférence en forme de baïonnette qui peut être déplacé dans une position engrenant un tenon (13) au niveau de l'extrémité de la structure (31) de la partie d'assise (3).

3. Siège de véhicule automobile (1) selon la revendication 2, le crochet (61) étant réalisé au niveau de la partie de la ferrure d'articulation (6) reliée à la structure (21) du dossier (2).

4. Siège de véhicule automobile (1) selon la revendication 1, la jonction de la barre de poussée (9) au dossier (2) comportant une course libre.

5. Siège de véhicule automobile (1) selon la revendication 4, la jonction de la barre de poussée (9) au dossier (2) étant actionnée par le biais d'un boulon engrenant (12) disposé au niveau de la structure (21) du dossier, ledit boulon étant logé dans un trou oblong (92) de la barre de poussée (9).

6. Siège de véhicule automobile (1) selon l'une quelconque des revendications précédentes, la structure (31) de la partie d'assise (3) étant soutenue, dans sa position d'utilisation, dans un support, au niveau de son extrémité arrière, par rapport à la base de siège (11).
